# EUROPEAN PATENT APPLICATION

(11) **EP 4 769 871 A1**
(43) Date of publication of application: **01.07.2026**
(21) Application number: 24223580.2
(22) Date of filing: 28.12.2024
(51) Int. Cl.: H02J 7/00, H04R 1/10

(54) **AUDIO SYSTEM WITH ADAPTIVE USER INTERFACE**

(71) Applicant: GN Hearing A/S, 2750 Ballerup (DK)
(72) Inventor: LUND, Rasmus Kvist, Copenhagen (DK)
(74) Representative: GN Store Nord A/S

(57) **Abstract**

An audio system (1) comprising an audio device (10) and a charging cradle (20) for storing the audio device (10). The charging cradle (20) comprises a cradle housing (200) with a device bay (201), a status detector (202), a cradle input interface (203), a rechargeable battery (204), and a cradle controller (205).

The device bay (201) is configured to accommodate the audio device (10) when the audio device (10) is stored in the charging cradle (20).

The status detector (202) is configured to detect whether the audio device (10) is stored in the charging cradle (20), determine a corresponding storing status, and provide the determined storing status in a cradle status signal (CS) to the cradle controller (205).

The cradle input interface (203) is configured to detect user input actions and provide indications of detected user input actions in a cradle input signal (UC) to the cradle controller (205).

The rechargeable battery (204) is configured to receive electric energy from an external energy source, store the received electrical energy, and provide stored electric energy (P) to the audio device (10) through the cradle controller (205) and/or the device bay (201).

In the audio system (1), the cradle controller (205) is configured to provide a user output signal (UO) comprising an indication of control commands in response to receiving indications of detected user input actions in the cradle input signal (UC) and/or in dependence on the cradle status signal (CS), such that, for identical indicated user input actions, the control command indication in the user output signal (UO) differs for different storing status indications in the cradle status signal (CS).

This enables using the controls of the cradle input interface (203) for different purposes, depending on whether the audio device (10) is stored in the charging cradle (20), and may thereby reduce the number of user controls required on the audio device (10) and/or the charging cradle (20).

## Description

The present disclosure relates to an audio system comprising an audio device and a charging cradle for storing the audio device.

### BACKGROUND

The user experience when interacting with audio devices is crucial for ensuring user satisfaction. Users engage with audio devices in various ways, such as fitting them, adjusting audio settings, and controlling media playback. These interactions can take different forms, such as mechanically interacting with controls like buttons or touchscreens comprised by the audio device and/or by a charging cradle for storing the audio device. Mechanical interaction may comprise e.g. pressing a button, manipulating a touch screen, adjusting a slider, etc.

However, as audio devices and audio systems become smaller and more portable, there is often limited space available for mechanically activated user input interfaces. This limitation restricts the number of ways in which a user can mechanically interact with the audio device or system. This is particularly true for in-ear devices that are intended for insertion into the ear canal and/or concha of the user and typically do not comprise sufficiently large surfaces for arranging mechanically activated user input interfaces.

Consequently, there is a need to address this challenge and find innovative solutions to ensure that users can mechanically interact in more ways with the audio device or system.

Accordingly, there is a need for an improved audio system.

### DISCLOSURE OF INVENTION

It is an object of the present invention to provide an improved audio system comprising an audio device and a charging cradle for storing the audio device.

This and other objects of the invention are achieved by the invention defined in the independent claims and further explained in the following description. Further objects of the invention are achieved by embodiments defined in the dependent claims and in the detailed description of the invention.

Within this document, the singular forms "a", "an", and "the" specify the presence of a respective entity, such as a feature, an operation, an element, or a component, but do not preclude the presence or addition of further entities. Likewise, the words "have", "include" and "comprise" specify the presence of respective entities, but do not preclude the presence or addition of further entities. The term "and/or" specifies the presence of one or more of the associated entities.

### BRIEF DESCRIPTION OF THE DRAWINGS

The invention is explained in more detail below together with preferred embodiments and with reference to the drawings in which:
FIG. 1 illustrates an audio system according to the present disclosure,
FIG. 2 shows a schematic diagram of an audio device comprised by the audio system of FIG. 1,
FIG. 3 shows a schematic diagram of a charging cradle comprised by the audio system of FIG. 1,
FIG. 4 shows the charging cradle of FIG. 3 with a lid in an open position,
FIG. 5 shows the charging cradle of FIG. 3 with the lid in a closed position, and
FIG. 6 shows details of the audio device of FIG. 2.

### DETAILED DESCRIPTION

Various example embodiments and details are described hereinafter, with reference to the figures when relevant. The figures may or may not be drawn to scale, and elements of similar structures or functions are represented by like reference numerals throughout the figures. Also, the figures are only intended to facilitate understanding of the description of the embodiments; they are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

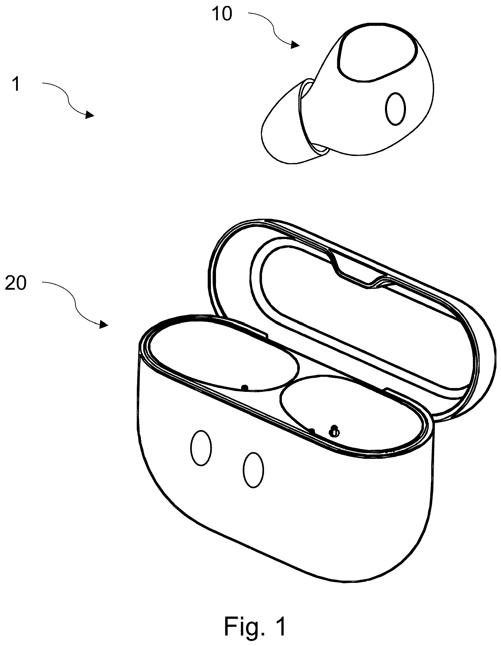

The audio system 1 shown in FIG. 1 comprises an audio device 10 and a charging cradle 20 for storing and charging the audio device 10.

The audio device 10 is configured to be worn by a user. The audio device 10 may be configured to be arranged at the user's ear, on the user's ear, over the user's ear, in the user's ear, in the user's ear canal, behind the user's ear, and/or in the user's concha, i.e., at the user's ear.

The audio system 1 may comprise a further audio device 10 configured to be worn at the user's respective other ear. The audio system 1 may thus comprise, e.g., a pair of earbuds or a headset with two earcups, each comprising an audio device 10. In such audio systems, the audio devices 10 may be connected - or connectable -wirelessly, by wires, and/or by, e.g., a strap, a neckband or a headband comprising wires. In such audio systems, the audio devices 10 may be substantially identical, or differ from each other.

The audio device(s) 10 may each - or together - constitute a hearable, such as a headset, a headphone, an earphone, an earbud, a hearing aid, a hearing protection device, and/or another type of head-wearable audio device.

The audio device(s) 10 may each - or together - be embodied in various housing styles or form factors. Some of such form factors are earbuds, on-the-ear headphones, and over-the-ear headphones. The person skilled in the art is aware of various kinds of audio devices and of different options for arranging the audio device(s) 10 in and/or at the ear of the audio device wearer.

The audio device 10 is preferably an in-ear device intended for being arranged in an operating position wherein it is, at least partially, inserted into the ear canal and/or concha of a user's ear. Such an audio device 10 may, when arranged in its operating position, have an exposed surface area of less than 10 cm², less than 8 cm², or even less than 6 cm². Such an audio device 10 may further, when arranged in its operating position, not have any surface portions extending beyond 2 cm, or beyond 1 cm, from the rim of the ear's concha. A typical adult user may not be able to easily and reliably manipulate a mechanically activated user interface arranged at the surface of such audio devices 10, and for such audio devices 10, the embodiments described herein may provide a significant advantage compared with prior art audio systems.

The charging cradle 20 is configured for storing the audio device 10, and optionally a second audio device 10 (not shown), e.g., when the audio device 10 is not arranged in the user's ear. The charging cradle 20 is preferably further configured for protecting the audio device 10 or audio devices 10 against mechanical and other influences during transport, e.g. when carried in a pocket or a bag. The charging cradle 20 is further configured for charging the audio device 10 or audio devices 10 when the audio device 10 or audio devices 10 is/are stored in the charging cradle 20. The charging cradle 20 is preferably further configured for charging the audio device 10 or audio devices 10 during transport when the audio device 10 or audio devices 10 is/are stored in, and is/are protected by, the charging cradle 20. The charging cradle 20 is preferably further configured for charging the audio device 10 or audio devices 10 when the charging cradle 20 is not itself connected to an electric power source.

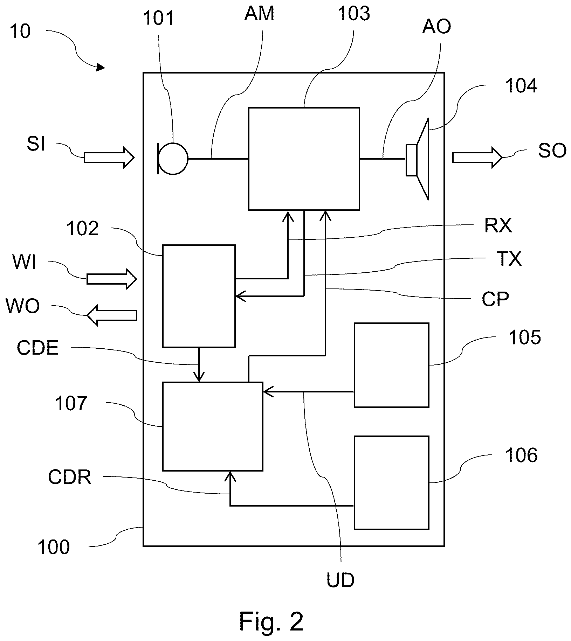

In the present context, an audio device 10 is "stored" in the charging cradle 20 when - and only when - the audio device 10 is arranged in a predefined storing position relative to the charging cradle 20 wherein the audio device 10 may receive electric power from the charging cradle 20 for charging its power supply (106, see FIG. 2).

The audio device 10 shown in FIG. 2 comprises a device housing 100 with an input transducer 101, a wireless transceiver 102, a signal processor 103, an output transducer 104, a device input interface 105, a power supply 106, and a device controller 107.

The input transducer 101 is configured to pick up input sound SI, convert the sound into a corresponding audio signal, and provide the resulting audio signal in a microphone audio signal AM to the signal processor 103. The input transducer 101 may comprise a microphone, a vibration sensor, an accelerometer, and/or any other acoustoelectric transducer suitable for picking up voice sound from the user and/or ambient sound from the user's environment. In some embodiments, the input transducer 101 may be omitted. In some embodiments, the audio device 10 comprises multiple input transducers 101, such as respective microphones, each of which is generally configured for converting an acoustic signal into an electric input signal.

The wireless transceiver 102 is configured to wirelessly receive a wireless input signal WI comprising an external audio signal and/or an external control signal from external device (not shown). The wireless transceiver 102 is further configured to provide the external audio signal in an input audio signal RX to the signal processor 103, and/or provide the external control signal in an external-device control signal CDE to the device controller 107. The wireless transceiver 102 may be configured to exchange signals through radio frequency signals, magnetic induction signals, optical signals and/or any other signals suitable for wireless exchange of audio signals and/or control signals. In some embodiments, the wireless transceiver 102 may be omitted. In some embodiments, the wireless transceiver 102 may comprise one or more wireless receivers and/or one or more wireless transmitters. The audio device 10 may comprise one or more antennas (not shown) connected to the wireless transceiver 102 for receiving and/or transmitting electromagnetic signals or optical signals from/to a corresponding wireless transceiver (not shown) in the charging cradle 20 and/or other external devices (not shown), such as another audio device 10, a personal computer, a table computer, a smartphone, a smartwatch, or the like. The wireless transceiver 102 may be configured for short-range wireless communication, utilizing e.g. near-field magnetic induction, and/or medium-range wireless communication, such as through Bluetooth, DECT, or the like.

The signal processor 103 is configured to process the microphone audio signal AM and/or the input audio signal RX and provide the resulting audio signal in an output audio signal AO to the output transducer 104. The signal processor 103 is further configured to process the microphone audio signal AM and provide the resulting audio signal in a voice audio signal TX to the wireless transceiver 102. The wireless transceiver 102 is further configured to wirelessly transmit the voice audio signal TX in a wireless output signal WO to an external device (not shown). In some embodiments, the signal processor 103 may be configured to ignore the microphone audio signal AM or the input audio signal RX in the provision of the output audio signal AO. In some embodiments, the signal processor 103 may be configured to refrain from providing the voice audio signal TX.

The external device transmitting the wireless input signal WI and/or receiving the wireless output signal WO may be a gateway device, i.e., a device providing a unidirectional or bidirectional audio connection between the audio device 10 and a communication network (not shown) to enable audio communication between the audio device 10 and remote audio devices (not shown) through the communication network. The communication network may be embodied as a landline telephone network, a computer network, such as the Internet, a local network (LAN), etc., including combinations hereof. The communication network may use analog and/or digital audio signals for communication between connected audio devices, and it may use any commonly known protocol for exchanging and/or transmitting such audio signals. Accordingly, the gateway device may be embodied as a personal computer, a tablet computer, a smartphone, a smartwatch, a landline telephone interface device, or the like. Alternatively, or additionally, the external device may be a media player, an audio recorder, a remote microphone, a remote speaker, or the like.

The output transducer 104 is configured to convert the output audio signal AO into a corresponding output sound SO and radiate the output sound towards and/or into an ear and/or ear canal of a user of the audio device 10. The output transducer 104 may comprise an electrodynamic speaker driver, a balanced armature driver, a piezoelectric driver, and/or any other electroacoustic transducer suitable for converting an electrical audio signal into sound.

The device input interface 105 is configured to detect user input actions and provide indications of detected user input actions in a device input signal UD to the device controller 107. The device input interface 105 may comprise one or more user controls (not shown), such as a touch sensor, a pressure sensor, a proximity sensor, and/or any other sensor suitable for detecting manipulation and/or other interaction by a user of the audio device 10. In some embodiments, the device input interface 105 may be omitted.

The power supply 106 is configured to receive electric energy and/or a remote-control signal (not shown) from an external charger device, such as the charging cradle 20, store received electric energy, provide stored electrical energy to circuits of the audio device 10, and/or provide the remote-control signal in a remote-device control signal CDR to the device controller 107. The power supply 106 may comprise a rechargeable battery (not shown), and/or any other energy storage suitable for receiving electric energy from an energy source, storing received electric energy, and providing stored electric energy to circuits of the audio device 10 to enable their operation.

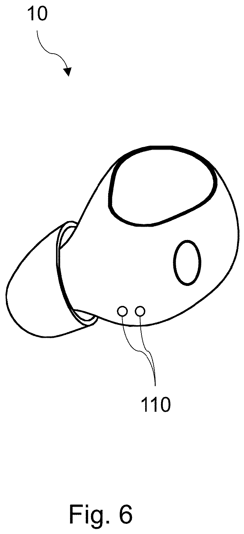

The power supply 106 may comprise one or more electrodes (110, see FIG. 6), electromagnetic coils (not shown), and/or other electric interface devices, configured to receive electric energy from the charging cradle 20 when the audio device 10 is stored in the charging cradle 20. The power supply 106 may, alternatively or additionally, comprise one or more electrodes 110, electromagnetic coils (not shown), optical receivers or transceivers, and/or other electronic interface devices, configured to receive electronic signals, such as the remote-control signal, from the charging cradle 20 when the audio device is stored in the charging cradle 20. In some embodiments, the one or more electric interface devices 110 for receiving the electric energy are at least partly configured to also receive the electronic signals. In some embodiments, both electric energy and electronic signals are received through the same set of one or more electrodes 110.

In some embodiments, the power supply 106 and/or the device controller 107 may be configured to provide a remote-status signal (not shown) indicating a status of the audio device 10, such as, e.g., whether the rechargeable battery of the audio device 10 is being charged, and/or an amount of energy available in the rechargeable battery and/or other energy storage. The power supply 106 and/or the device controller 107 may be configured to transmit the remote-status signal through the one or more electrodes 110, electromagnetic coils, optical transmitters or transceivers, and/or other electric interface devices to the charging cradle 20.

The device controller 107 may be configured to provide a process control signal CP to the signal processor 103 in dependence on one or more of the external-device control signal CDE, the device input signal UD, and the remote-device control signal CDR. The signal processor 103 may further be configured to control the processing of the microphone audio signal AM and/or the input audio signal RX in the provision of the output audio signal AO and/or the voice audio signal TX in dependence on the process control signal CP.

The audio device 10 and/or the signal processor 103 may be configured to one or more of: Enabling the user to listen to the input audio signal RX wirelessly received through the wireless transceiver (or receiver) 102; enabling the user to engage in audio communication with remote parties by exchanging the input audio signal RX and the voice audio signal TX through the wireless transceiver 102 and optionally an external gateway device; providing hearing enhancement, noise suppression, and/or hearing protection by including - and optionally further enhancing and/or suppressing at least portions of - the microphone audio signal AM in the output audio signal AO; and picking up the user's voice sound SI with the input transducer 101 and transmitting a representation of the user's voice sound SI in the voice audio signal TX to an external device (not shown) through the wireless transceiver (or transmitter) 102 and optionally an external gateway device. The audio device 10 and/or the signal processor 103 may comprise further components and/or functional blocks enabling the audio device 10 and/or the signal processor 103 to perform other functions known from audio devices, such as active noise cancelling, echo suppression, and/or speech enhancement.

The audio device 10 may thus enable a user to, e.g., listen to remote audio media, such as music or radio, and/or engage in phone calls, remote meetings, and other audio communication with remote parties through external devices, such as gateway devices. The audio device 10 and/or the signal processor 103 may preferably further be configured to control accepting and/or rejecting of phone calls and other audio communication with or through such external devices or gateway devices in dependence on the process control signal CP.

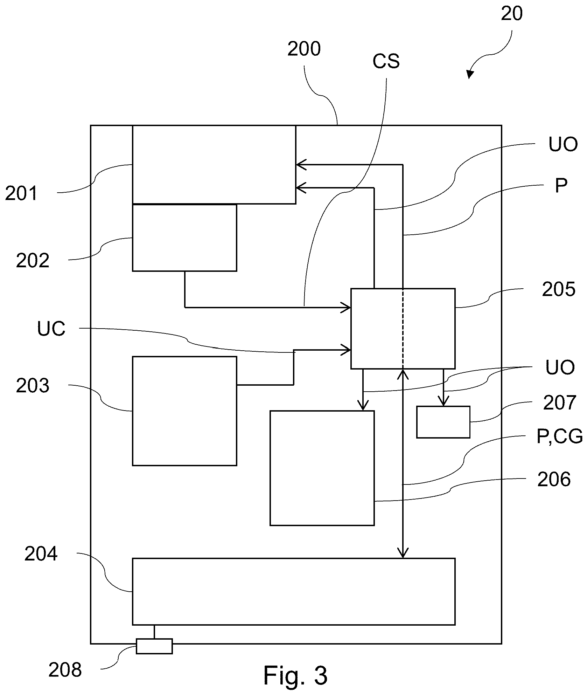

The charging cradle 20 shown in FIG. 3 comprises a cradle housing 200 with a device bay 201, a status detector 202, a cradle input interface 203, a rechargeable battery 204, a cradle controller 205, a user output interface 206, and an update controller 207.

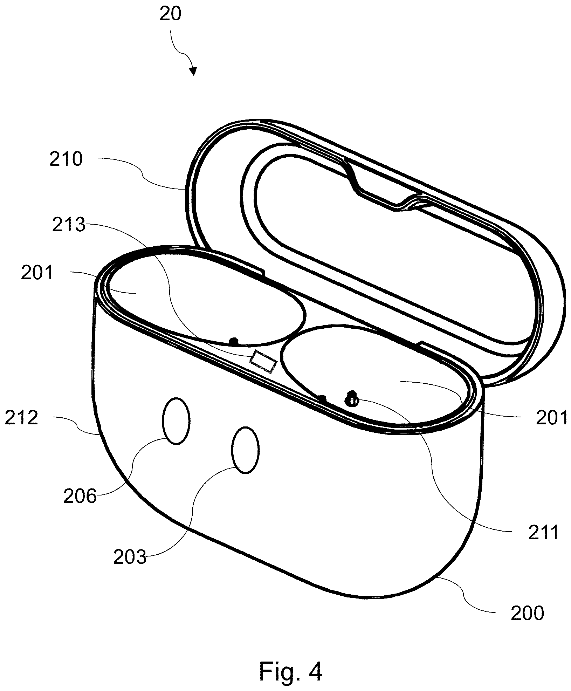

The device bay 201 is configured to accommodate the audio device 10 when the audio device 10 is stored in the charging cradle 20. The charging cradle 20 may comprise a movable lid (210, see FIG. 4) for protecting the audio device 10 against mechanical influences and ingression of e.g. water, dust or moisture during transport.

The status detector 202 is configured to detect whether the audio device 10 is stored in the charging cradle 20, determine a corresponding storing status, and provide the determined storing status in a cradle status signal CS to the cradle controller 205. The status detector 202 may further be configured to receive a remote-status signal (not shown) from an audio device 10 stored in - or otherwise arranged close to - the device bay 201 and convey one or more indications from the remote-status signal in the cradle status signal CS.

The cradle input interface 203 is configured to detect user input actions and provide indications of detected user input actions in a cradle input signal UC to the cradle controller 205. The cradle input interface 203 may comprise one or more user controls (not shown), such as an electromechanical switch, a touch sensor, a pressure sensor, a proximity sensor, and/or any other sensor suitable for detecting manipulation and/or other interaction by a user of the charging cradle 20.

The rechargeable battery 204 is configured to receive electric energy from an external energy source (not shown), store the received electrical energy, and provide stored electric energy P to the audio device 10 through the cradle controller 205 and/or the device bay 201. The rechargeable battery 204 may further be configured to provide stored electric energy to the device bay 201, the status detector 202, the cradle input interface 203, the cradle controller 205, the user output interface 206, and/or the update controller 207. The rechargeable battery 204 may comprise one or more charging interfaces 208, such as a separatable electrical connector, a charging coil, or the like, for receiving the electrical energy from the external power source. The one or more charging interfaces 208 may further be configured to receive and/or transmit electronic gateway control signals CG from/to the external power source. For instance, the one or more charging interfaces 208 may comprise a USB-C connector (not shown) that allows the charging cradle 20 to both receive electric power from a gateway device and exchange gateway control signals (not shown) with that gateway device. The cradle controller 205 may receive and/or transmit such gateway control signals CG through the one or more charging interfaces 208.

The cradle controller 205 is configured to provide a user output signal UO comprising an indication of control commands in response to receiving indications of detected user input actions in the cradle input signal UC and/or in dependence on the cradle status signal CS, such that, for identical indicated user input actions, the control command indication in the user output signal UO differs for different storing status indications in the cradle status signal CS. This enables using the controls of the cradle input interface 203 for different purposes, depending on whether the audio device 10 is stored in the charging cradle 20, and may thereby reduce the number of user controls required on the audio device 10 and/or the charging cradle 20.

In embodiments of the charging cradle 20 comprising two device bays 201, the status detector 202 may be configured to detect individually for each device bay 201 whether an audio device 10 is stored in the charging cradle 20, determine a respective storing status for each device bay 201, and provide the determined storing status for each device bay 201 in the cradle status signal CS to the cradle controller 205. In such embodiments, the status detector 202 may be configured to provide the cradle status signal CS to indicate, for instance, that an arbitrary one of the two audio devices 10 is stored in the charging cradle 20, that a specific one of the two audio devices 10 is stored in the charging cradle 20, that the respective other one of the two audio devices 10 is stored in the charging cradle 20, that both of the two audio devices 10 are stored in the charging cradle 20, or that none of the two audio devices 10 are stored in the charging cradle 20. Correspondingly, the cradle controller 205 may in such embodiments be configured to provide the control command indication in the user output signal UO depending on such more detailed storing status indications in the cradle status signal CS. In such embodiments, the status detector 202 may further be configured to receive an individual remote-status signal (not shown) from each audio device 10 stored in - or otherwise arranged close to - the respective device bay 201 and convey one or more indications from the respective remote-status signals in the cradle status signal CS.

Consequently, the audio system 1 may provide a plurality of functionalities to a user of the audio system 1. In particular, the audio system 1 may adapt its reaction to user input actions detected by the cradle input interface 203 to assumed (pre-configured) or expressed (user-configured) preferences of the user for different situations, e.g., by providing the user output signal UO in dependence on the cradle status signal CS, i.e., on whether the audio device 10 is stored in the charging cradle 20, and optionally on how many audio devices 10 are stored in the charging cradle 20.

The cradle controller 205 is configured to provide the user output signal UO to the device bay 201, the user output interface 206, the update controller 207, and/or the one or more charging interfaces 208.

The device bay 201 may comprise one or more electrodes 211 (see FIG. 4), electromagnetic coils (not shown), and/or other electric interface devices, configured to transmit electric energy P to the audio device 10 when the audio device 10 is stored in the charging cradle 20. The device bay 201 may, alternatively or additionally, comprise one or more electrodes 211, optical transmitters or transceivers, electromagnetic coils (not shown), and/or other electronic interface devices, configured to transmit the remote-control signal to the audio device 10 when the audio device 10 is stored in the charging cradle 20. In some embodiments, the one or more electric interface devices 211 for transmitting the electric energy P are at least partly configured to also transmit the remote-control signal. In some embodiments, both electric energy P and the remote-control signal are transmitted through the same set of one or more electrodes 211. The device bay 201 may preferably be configured to provide an indication of the user output signal UO, or any indications therein, in the remote-control signal transmitted to the audio device 10.

The user output interface 206 is configured to provide an indication of a status of the audio system 1 to the user in dependence on the user output signal UO provided by the cradle controller 205. In some embodiments, the user output interface 206 may be omitted.

The update controller 207 is configured to update firmware of the charging cradle 20 in response to a respective update command indicated in the user output signal UO provided by the cradle controller 205. In some embodiments, the update controller 207 may be omitted.

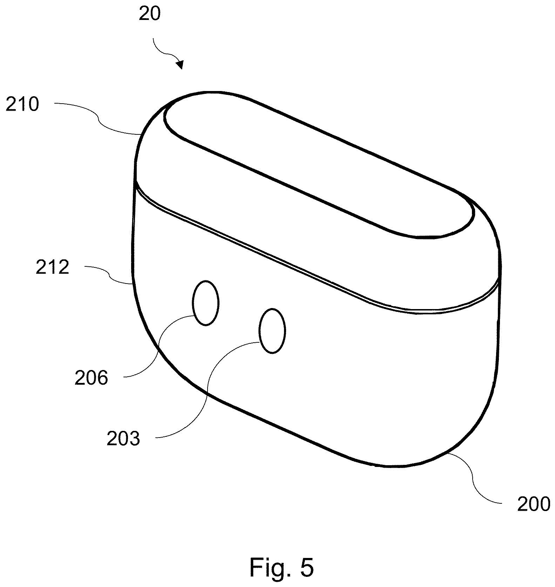

FIG. 4 shows further details of an embodiment of the charging cradle 20 shown in FIG. 2. The cradle housing 200 comprises a main body 212 with a first device bay 201, an optional second device bay 201, and a lid 210 that is movable between an open position shown in FIG. 4 and a closed position (see FIG. 5) relative to the main body 212. The lid 210 and the device bays 201 may be configured to maintain or hold the audio device 10, and optionally a further audio device 10, in a fixed or restrained position when the lid 210 is in its closed position while enabling the removal of the respective audio device 10 from the cradle housing 200 when the lid 210 is in its open position. In some embodiments, the lid 210 may be omitted. In other embodiments, the lid 210 may be configured as, e.g., a slidable lid instead of a hinged lid.

Each device bay 201 comprises a concave surface portion arranged and shaped to accommodate or hold the audio device 10 during storing. In some embodiments, each device bay 201 may, alternatively or additionally, comprise one or more magnets, fixtures, and/or protruding surface features (not shown) arranged and shaped to maintain, accommodate and/or hold the respective audio device 10 during storing. Each device bay 201 is showed with electrodes 211 as described further above. In some embodiments, the electrodes 211 may be omitted. In some embodiments, each device bay 201 may, additionally or alternatively, comprise electromagnetic coils, optical receivers, optical transmitters or optical transceivers, and/or other electric or electronic interface devices.

In the shown charging cradle 20, the cradle input interface 203 is implemented in the form of a button 203 mounted on the main body 212. The cradle input interface 203 may generally be any interface enabling the user to provide input to the charging cradle 20 via touch, voice, movement, gesticulation, or similar. In some embodiments, the cradle input interface 203 comprises a button, such as an electromechanical switch button or a capacitive touch sensor. Alternatively, or additionally, the cradle input interface 203 may comprise a microphone, and/or a movement sensor, such as an accelerometer, or the like.

A button 203 may be defined as a surface of the charging cradle 20 which a user may interact with to operate a function of the charging cradle 20 and/or the audio device 10. The interaction may be in the form of a touch, such as a press. In an embodiment the button 203 is a touch sensitive button. The touch sensitive button may comprise a touch screen or similar. The touch sensitive button may be configured to measure touch via a capacitive measurement.

In some embodiments the button 203 is a pressure sensitive button. A pressure sensitive button may comprise a depressible portion of the surface of the housing 200 of the charging cradle 20. The pressure sensitive button may comprise a sensor configured for measuring a deflection of the depressible surface, such as a force sensor or a switch.

In the shown charging cradle 20, the user output interface is implemented in the form of an indicator 206 mounted on the main body 212. The user output interface 206 is configured to provide an indication of a plurality of statuses related to the audio device 10 and/or the charging cradle 20. The user output interface 206 may be configured to provide an audible, a visual, and/or a tactile indication on a plurality of statuses related to the audio device 10 and/or the charging cradle 20.

The indicator 206 may comprise a loudspeaker configured to provide an audible indication to the user in response to the user interacting with the cradle input interface 203 and/or in dependence on the user output signal UO. The indicator 206 may comprise an LED or other light emitting means configured to provide a visual indication to the user in response to the user interacting with the cradle input interface 203 and/or in dependence on the user output signal UO. The indicator 206 may comprise a vibrational unit or other tactile means configured to provide a tactile indication to the user in response to the user interacting with the cradle input interface 203 and/or in dependence on the user output signal UO.

The cradle controller 205 may be configured to provide the user output signal UO in further dependence on whether the lid 210 is in its closed position. The cradle controller 205 may preferably determine the position of the lid 210 from a lid position signal (not shown) provided by a lid sensor 213. The lid sensor 213 is configured to provide the lid position signal to indicate whether the lid 210 is in its closed position. The lid sensor 213 may be, e.g., a mechanical switch or a magnetic sensor, such as a hall-effect sensor that engages with a magnetic or magnetizable counterpart mounted on the lid.

The cradle controller 205 may thus be configured to provide the user output signal UO such that, for identical indicated user input actions, the control command indication in the user output signal UO differs for different lid position indications in the lid position signal. This further enhances the possibilities for using the controls of the cradle input interface 203 for different purposes.

The cradle controller 205 may be programmable by a user to change which control commands are indicated in the user output signal UO for different combinations of user input action indications in the cradle input signal UC, storing status indications in the status signal CS, and/or lid position indications in the lid position signal.

FIG. 5 shows the charging cradle 20 with the lid 210 in its closed position relative to the main body 212.

FIG. 6 shows the audio device 10 with two electrodes 110 configured to enable the audio device 10 to receive electric energy from the charging cradle 20, optionally receive a remote-control signal from the charging cradle 20 and/or optionally transmit a remote-status signal to the charging cradle 20.

The general configuration of the audio system 1 and its components, the audio device 10 and the charging cradle 20, optionally further configured as described in one or more of the various disclosed optional embodiments or variants, enables the audio system 1 to provide varying responses to identical user input actions, depending on whether the audio device 10 is stored in the charging cradle 20, and optionally on whether the lid 210 is in its closed position. In embodiments of the audio system 1 comprising two audio devices 10, the audio system 1 may further provide varying responses to identical user input actions, depending further on which of the two audio devices 10 is stored in the charging cradle 20 and/or on whether both audio devices 10 are stored in the charging cradle 20.

Examples of such varying responses are described in the following. A user of an audio system 1 wherein the cradle controller 205 is programmable by the user may want to modify such responses to align with their own preferences for interacting with the cradle input interface 203. In the description of the examples, the term "configured for" applies both to such responses that are pre-configured in the design or manufacturing of the audio system 1 and to such responses that are programmed (user-configured) by the user, e.g. by interaction with the cradle input interface 203 or with an external device connected to charging cradle 20. Also, the examples described below are based on an audio system 1 comprising one audio device 10 and a charging cradle 20 but may obviously easily be adapted to an audio system 1 comprising two audio devices 10 and a charging cradle 20. The described examples may be combined arbitrarily to achieve a desired functionality of the audio system 1.

In the examples, the terms "paired" and "connected" refer to the equally named statuses known in the field of wired and/or wireless audio communication, e.g., from Bluetooth or DECT protocols.

### Example 1:

In this example, the cradle input interface 203 comprises a status user control configured for activating an indication of a system status, the cradle controller 205 is configured to provide the user output signal UO to the user output interface 206 and such that the user output signal UO indicates a device status command in response to receiving an indication of the user activating the status user control when the status signal CS indicates that the audio device 10 is stored in the charging cradle 20 (storing status "stored"), and indicates a cradle status command in response to receiving an indication of the user activating the status user control when the status signal CS indicates that the audio device 10 is not stored in the charging cradle 20 (storing status "not stored"). In addition, the user output interface 206 is configured to indicate a system status related to the audio device 10 (a "device status") in response to receiving the device status command and to indicate a system status related to the charging cradle 20 (a "cradle status") in response to receiving the cradle status command.

In a variation of this example, the cradle controller 205 may be configured to provide the device status command in the storing status "stored" but only when the status signal CS indicates that the lid 210 is closed (lid position "closed"), and to provide the cradle status command when the status signal CS indicates that the lid 210 is not closed (lid position "not closed"), regardless of the indicated storing status, or vice versa with respect to the lid position.

The device status may comprise a device charging status, such as whether the rechargeable battery of the audio device 10 is being charged, and the cradle status may comprise a cradle charging status, such as whether the rechargeable battery 204 of the charging cradle 20 is being charged.

Alternatively, or additionally, the device status may comprise a device charge status, such as an amount of energy available in the rechargeable battery of the audio device 10, and the cradle status may comprise a cradle charge status, such as an amount of energy available in the rechargeable battery 204 of the charging cradle 20.

Alternatively, or additionally, the device status may comprise a device pairing status, such as whether the audio device 10 is paired with another device, such as a gateway device or another audio device 10, and/or a device connection status, such as whether the audio device 10 is connected with another device, such as a gateway device or another audio device 10, and the cradle status may comprise a cradle connection status, such as whether the charging cradle 20 is connected to another device, such as a gateway device.

The cradle controller 205 may be configured to derive the device status from, e.g., indications from the remote-status signal received by the device bay 201 and conveyed in the cradle status signal CS.

### Example 2:

In this example, the cradle input interface 203 comprises a process user control configured for activating a system process, and the cradle controller 205 is configured to provide the user output signal UO to the device bay 201 and optionally to the user output interface 206 and such that the user output signal UO indicates a device process command in response to receiving an indication of the user activating the process user control when the status signal CS indicates the storing status "stored", and to provide the user output signal UO to the device bay 201, to the user output interface 206, and/or the update controller 207 and such that the user output signal UO indicates a cradle process command in response to receiving an indication of the user activating the process user control when the status signal CS indicates the storing status "not stored". In addition, the device bay 201 is configured to provide a remote-control signal to the audio device 10 indicating the device process command in response to receiving an indication of the device process command in the user output signal UO, and the audio device 10 is configured to initiate a system process related to the audio device 10 (a "device process") in response to receiving an indication of the device process command in the remote-control signal. Furthermore, the user output interface 206 may be configured to indicate a status of the device process in response to receiving the device process command and/or to indicate a status of the cradle process in response to receiving the cradle process command. Furthermore, the update controller 207 may be configured to initiate a system process related to the charging cradle 20 (a "cradle process") in response to receiving the cradle process command.

In a variation of this example, the cradle controller 205 may be configured to provide the device process command in the storing status "stored" but only when the status signal CS indicates that the lid position "closed", and to provide the cradle process command when the status signal CS indicates the lid position "not closed", regardless of the indicated storing status, or vice versa with respect to the lid position.

The device process may comprise activating a pairing mode of the audio device 10, establishing pairing of the audio device 10 with another device, such as a gateway device or another audio device 10, and/or establishing a wireless connection between the audio device 10 and another device, such as a gateway device or another audio device 10, and the cradle process may comprise establishing a connection between the charging cradle 20 and another device, such as a gateway device.

Alternatively, or additionally, the device process may comprise updating firmware of the audio device 10, and the cradle process may comprise updating firmware of the charging cradle 20.

### Example 3:

In this example, the cradle input interface 203 comprises an action user control configured for modifying a system setting and/or system status, and/or a setting or status of a gateway device connected to the charging cradle 20, and the cradle controller 205 is configured to provide the user output signal UO such that it indicates a device action command in response to receiving an indication of the user activating the action user control when the status signal CS indicates the storing status "stored", and to provide the user output signal UO such that it indicates a gateway action command in response to receiving an indication of the user activating the action user control when the status signal CS indicates the storing status "not stored". In addition, the device bay 201 is configured to provide a remote-control signal to the audio device 10 indicating the device action command in response to receiving an indication of the device action command in the user output signal UO, and the audio device 10 is configured to modify a system setting and/or system status related to the audio device 10 (a "device setting") in response to receiving an indication of the device action command in the remote-control signal. Furthermore, the one or more charging interfaces 208 is configured to provide a gateway control signal CG indicating a first gateway command to a gateway device connected to the one or more charging interfaces 208 in response to receiving an indication of the device setting command, and/or to provide the gateway control signal indicating a second gateway command to the gateway device in response to receiving an indication of the gateway action command.

In a variation of this example, the cradle controller 205 may be configured to provide the indication of the device action command in the storing status "stored" but only when the status signal CS indicates that the lid position "closed", and to provide the indication of the gateway action command when the status signal CS indicates the lid position "not closed", regardless of the indicated storing status, or vice versa with respect to the lid position.

The device setting may comprise a call setting controlling whether the audio device 10 automatically accepts incoming calls when not stored in the charging cradle 20, automatically accepts incoming calls in response to detecting that it is removed from the charging cradle 20, accepts incoming calls in response to detecting that the user activates a user control of the device input interface 105, ignores incoming calls, and/or automatically rejects incoming calls.

The device setting may, additionally or alternatively, comprise a mute setting controlling whether the audio device 10 automatically mutes its microphone when accepting an incoming call and/or a connection setting controlling whether the audio device 10 is connected to a gateway device.

The gateway device may comprise one or more sound interface devices, i.e. microphones or loudspeakers, that it can use for input and/or output of sound when communicating audio through a communication network, playing back audio media content, and/or recording sound from the environment. The gateway device may, additionally or alternatively, be configured to connect to one or more other sound interface devices, such as the audio device 10, another headset, a speakerphone, or the like, and use these for input and/or output of sound in the mentioned situations.

The first gateway command and/or the second gateway command may comprise a command to cause the gateway device to modify a gateway setting. The gateway setting may comprise a sound interface setting controlling which sound interface device to use by default for input and/or output of sound when receiving an incoming call.

The first gateway command and/or the second gateway command may, additionally or alternatively, comprise a command to cause the gateway device to modify a gateway status, such as a command to accept an incoming call, a command to reject an incoming call, a command to mute or unmute the sound sent to the communication network, a command to increase or decrease the level of sound output by a connected sound interface device, a command to start, pause, or stop playback, and/or switch playback track or source, and/or a command to start, pause, or stop sound recording.

The user may thus modify various settings of the audio device 10 through the cradle input interface 203 when the audio device 10 is stored in the charging cradle 20.

When the audio device 10 is switched off, it is generally not available to the gateway device as sound interface device, and the gateway device will then generally rely on other sound interface devices. When, however, the audio device 10 is switched on and connected to the gateway device, then the gateway device will generally use the audio device 10.

When the audio device 10 is switched on and stored in the charging cradle 20, then the user may modify the settings of the audio device 10 as described above to achieve a desired response to e.g. an incoming call. When, however, the audio device 10 is switched on, connected to the gateway device, and not stored in the charging cradle 20, then there is no easy way for the user to modify those settings. When the audio device 10 is connected to the same gateway device as the charging cradle 20, then the user may indirectly control behaviour of the audio device 10 by having the charging cradle 20 send gateway commands to the gateway device.

### Example 4:

This example is a special embodiment of example 3 above.

In this example, the one or more charging interfaces 208 is configured to provide the indication of the first gateway command such that it indicates a command for the gateway device to accept an incoming call using only one or more sound interfaces not comprised by the audio system 1, and to provide the indication of the second gateway command such that it indicates a command for the gateway device to accept an incoming call using the audio device 10 as sound interface device.

This enables the user to easily accept an incoming call by activating the action user control of the charging cradle 20, both when the user is already wearing the audio device 10, and when the user is not wearing the audio device 10 and wishes to use another sound interface device.

In addition, the audio device 10 may further be configured to accept an incoming call in response to detecting that it is removed from the charging cradle 20. This spares the user of executing a dedicated accept action when accepting an incoming call that the user wants to engage in through the audio device 10.

The described devices may be implemented using analog or digital circuits, or combinations hereof. Functional blocks of digital circuits may be implemented in hardware, firmware or software, or any combination hereof. Digital circuits may perform the functions of multiple functional blocks in parallel and/or in interleaved sequence, and functional blocks may be distributed in any suitable way among multiple hardware units, such as e.g. dedicated signal processors, microcontrollers, and other integrated or discrete circuits.

Although features have been shown and described, it will be understood that they are not intended to limit the claimed disclosure, and it will be obvious to those skilled in the art that various changes and modifications may be made without departing from the spirit and scope of the disclosure. The specification and drawings are, accordingly, to be regarded in an illustrative rather than restrictive sense.

## Claims

1. An audio system (1), comprising:
- an audio device (10); and
- a charging cradle (20) for storing the audio device (10),
wherein the charging cradle (20) comprises a cradle housing (200) with a device bay (201), a status detector (202), a cradle input interface (203), a rechargeable battery (204), and a cradle controller (205),
wherein:
- the device bay (201) is configured to accommodate the audio device (10) when the audio device (10) is stored in the charging cradle (20);
- the status detector (202) is configured to detect whether the audio device (10) is stored in the charging cradle (20), determine a corresponding storing status, and provide the determined storing status in a cradle status signal (CS) to the cradle controller (205);
- the cradle input interface (203) is configured to detect user input actions and provide indications of detected user input actions in a cradle input signal (UC) to the cradle controller (205); and
- the rechargeable battery (204) is configured to receive electric energy from an external energy source, store the received electrical energy, and provide stored electric energy (P) to the audio device (10) through the cradle controller (205) and/or the device bay (201),
**characterised in that**
the cradle controller (205) is configured to provide a user output signal (UO) comprising an indication of control commands in response to receiving indications of detected user input actions in the cradle input signal (UC) and/or in dependence on the cradle status signal (CS), such that, for identical indicated user input actions, the control command indication in the user output signal (UO) differs for different storing status indications in the cradle status signal (CS).

2. An audio system according to claim 1, wherein:
- the charging cradle (20) further comprises a user output interface (206) configured to provide an indication of a status of the audio system (1) to the user in dependence on the user output signal (UO) provided by the cradle controller (205).

3. An audio system according to claim 2, wherein:
- the cradle input interface (203) comprises a status user control configured for activating an indication of a system status;
- the cradle controller (205) is configured to provide the user output signal (UO) such that it indicates a device status command in response to receiving an indication of the user activating the status user control when the status signal (CS) indicates that the audio device (10) is stored in the charging cradle (20), and indicates a cradle status command in response to receiving an indication of the user activating the status user control when the status signal CS indicates that the audio device (10) is not stored in the charging cradle 20; and
- the user output interface (206) is configured to indicate a system status related to the audio device (10) in response to receiving the device status command and to indicate a system status related to the charging cradle (20) in response to receiving the cradle status command.

4. An audio system according to claim 3, wherein:
- the system status related to the audio device (10) comprises a device charging status, such as whether the rechargeable battery of the audio device (10) is being charged; and
- the system status related to the charging cradle (20) comprises a cradle charging status, such as whether the rechargeable battery (204) of the charging cradle (20) is being charged.

5. An audio system according to claim 3 or 4, wherein:
- the system status related to the audio device (10) comprises a device charge status, such as an amount of energy available in the rechargeable battery of the audio device (10); and
- the system status related to the charging cradle (20) comprises a cradle charge status, such as an amount of energy available in the rechargeable battery (204) of the charging cradle (20).

6. An audio system according to any of claims 3-5, wherein:
- the system status related to the audio device (10) comprises a device pairing status, such as whether the audio device (10) is paired with another device, such as a gateway device or another audio device (10), and/or a device connection status, such as whether the audio device (10) is connected with another device; and
- the system status related to the charging cradle (20) comprises a cradle connection status, such as whether the charging cradle (20) is connected to another device, such as a gateway device.

7. An audio system according to any preceding claim, wherein:
- the cradle input interface (203) comprises a process user control configured for activating a system process;
- the cradle controller (205) is configured to provide the user output signal (UO) such that it indicates a device process command in response to receiving an indication of the user activating the process user control when the status signal (CS) that the audio device (10) is stored in the charging cradle (20) and indicates a cradle process command in response to receiving an indication of the user activating the process user control when the status signal (CS) indicates that the audio device (10) is not stored in the charging cradle (20);
- the device bay (201) is configured to provide a remote-control signal to the audio device (10) indicating the device process command in response to receiving an indication of the device process command in the user output signal (UO); and
- the audio device (10) is configured to initiate a system process related to the audio device (10) in response to receiving an indication of the device process command in the remote-control signal.

8. An audio system according to claim 7, wherein:
- the charging cradle (20) further comprises an update controller (207) configured to initiate a system process related to the charging cradle (20).

9. An audio system according to claim 7 or 8, wherein the user output interface (206) is further configured to indicate a status of the system process related to the audio device (10) in response to receiving the device process command and/or to indicate a status of the system process related to the charging cradle (20) in response to receiving the cradle process command.

10. An audio system according to any preceding claim, wherein:
- the cradle input interface (203) comprises an action user control configured for modifying a system setting and/or system status, and/or a setting or status of a gateway device connected to the charging cradle (20);
- the cradle controller (205) is configured to provide the user output signal (UO) such that it indicates a device action command in response to receiving an indication of the user activating the action user control when the status signal (CS) indicates that the audio device (10) is stored in the charging cradle (20), and to provide the user output signal (UO) such that it indicates a gateway action command in response to receiving an indication of the user activating the action user control when the status signal (CS) indicates that the audio device (10) is not stored in the charging cradle (20);
- the device bay (201) is configured to provide a remote-control signal to the audio device (10) indicating the device action command in response to receiving an indication of the device action command in the user output signal (UO);
- the audio device (10) is configured to modify a system setting and/or system status related to the audio device (10) in response to receiving an indication of the device action command in the remote-control signal;
- the rechargeable battery (204) comprises one or more charging interfaces (208) configured for receiving electrical energy from an external power source and to receive and/or transmit electronic gateway control signals (CG) from/to the external power source; and
- the one or more charging interfaces (208) is configured to provide a gateway control signal (CG) indicating a first gateway command to a gateway device connected to the one or more charging interfaces (208) in response to receiving an indication of the device setting command, and/or to provide the gateway control signal indicating a second gateway command to the gateway device in response to receiving an indication of the gateway action command.

11. An audio system according to claim 10, wherein:
- the one or more charging interfaces (208) is configured to provide the indication of the first gateway command such that it indicates a command for the gateway device to accept an incoming call using one or more sound interfaces not comprised by the audio system (1) for input and/or output of sound, and to provide the indication of the second gateway command such that it indicates a command for the gateway device to accept an incoming call using the audio device (10) as sound interface device for input and/or output of sound.

12. An audio system according to claim 10 or 11, wherein the audio device (10) is further configured to accept an incoming call in response to detecting that it is removed from the charging cradle (20).

13. An audio system according to any preceding claim, wherein:
- the housing (200) of the charging cradle (20) further comprises a main body (212) and a lid (210) that is movable between an open position and a closed position relative to the main body (212);
- the charging cradle (20) further comprises a lid sensor (213) configured to provide a lid position signal indicating whether the lid (210) is in its closed position; and
- the cradle controller (205) further is configured to provide the user output signal (UO) in further dependence on the lid position signal.
